# EUROPEAN PATENT APPLICATION

(11) **EP 4 148 412 A1**
(43) Date of publication of application: **15.03.2023**
(21) Application number: 22157775.2
(22) Date of filing: 21.02.2022
(51) Int. Cl.: G01N 15/02, G01N 15/10, G01N 15/14, G01N 15/00, G01N 1/22

(54) **SYSTEM AND METHOD FOR DETECTING FINE DUST USING LOW-POWER LASER LIGHT**

(30) Priority: 08.09.2021 KR 20210119652
(71) Applicant: National Institute of Meteorological Sciences, Seogwipo-si, Jeju-do 63568 (KR)
(72) Inventor: Young-Suk, OH, 63568 SEOGWIPO-SI (KR); Daegeun, SHIN, 101-215 SEOGWIPO-SI (KR)
(74) Representative: EP&C

(57) **Abstract**

Provided are a system and a method for detecting fine dust using low-power laser light, wherein three low-power laser beams are horizontally emitted from laser generators (10, 12, and 13) positioned at a first surface inside a main body (1) that has an open upper part and a lower part provided with a semi-transparent cell (30), the laser beams are received by light receivers (20, 22, and 23) positioned at a second surface facing the first surface, detection signals are input from the light receivers, fine dust particles accumulated on the semi-transparent cell are separated by size, and an absorption intensity signal varying according to the distribution of the fine dust particles is received and used to analyze the movement speeds, shapes, distribution, sizes, and amount of the fine dust particles.

## Description

### CROSS REFERENCE TO RELATED APPLICATION

The present application claims priority to Korean Patent Application No. 10-2021-0119652, filed September 08, 2021, the entire contents of which is incorporated herein for all purposes by this reference.

### BACKGROUND OF THE INVENTION

### Field ofthe Invention

The present disclosure relates to a system and a method for detecting fine dust using low-power laser light. More particularly, the present disclosure relates to a system and a method for detecting fine dust using low-power laser light, wherein three low-power laser beams are horizontally emitted by laser generators from an inner sidewall of a main body that has an open upper part and a lower part provided with a semi-transparent cell, the laser beams are received by light receivers at positions on the inner sidewall of the main body facing the laser generators, detection signals are input from the light receivers, fine dust particles accumulated on the semi-transparent cell are separated by size, and an absorption intensity signal varying according to the distribution of fine dust particles is input from the semi-transparent cell and used to analyze the movement speeds, shapes, distribution, sizes, and amount of fine dust particles.

### Description of the Related Art

In general, dust measurement methods include weight concentration measurement methods (high-capacity and low-capacity collection methods) and relative concentration measurement methods (a light transmission method).

In the weight concentration measurement methods, particulate matter floating in the atmosphere is collected in a filter for a predetermined time period through isokinetic collecting, and then the volume of the collected air and the mass of the collected particles are measured to obtain a particle concentration. It is difficult to measure the time-based concentration because the filter can be obtained only one or two times a day. In addition, additional operation processes, such as processing before and after the use of a filter and mass measurement after particle collection, are essential, so real-time measurement is impossible.

Lidar, one of the relative concentration measurement methods, is a remote method in which laser beams are emitted to the matter to be observed in the atmosphere and the backscattered light is collected so that the shape and the concentration of the fine particles in the atmosphere can be determined. However, the laser equipment used to emit laser beams into the atmosphere and the equipment for observation are very costly.

Therefore, there is a need for a new dust measurement method that can overcome the disadvantages of the weight concentration measurement methods and the relative concentration measurement methods used in the related art.

The foregoing is intended merely to aid in the understanding of the background of the present disclosure, and is not intended to mean that the present disclosure falls within the purview of the related art that is already known to those skilled in the art.

### Document of Related Art

(Patent Document) Korean Patent Application Publication No. 10-2019-0079820 (publication date: 08 July 2019)

### SUMMARY OF THE INVENTION

The present disclosure is directed to providing a system and a method for detecting dust using low-power laser light, the system and the method being capable of monitoring the movement speeds, shapes, distribution, sizes, and amount of fine dust particles in real time and having a low manufacturing cost.

According to an embodiment of the present disclosure, there is provided a system for detecting fine dust using low-power laser light, the system including: a main body having an open upper part and a lower part provided with a semi-transparent cell; a chamber configured to allow potential energy having progressively decreasing intensity and a sine wave to be applied below the semi-transparent cell; a first laser generator configured to horizontally generate a laser of a first set wavelength at an end on an inner sidewall of the main body; a second laser generator configured to horizontally generate a laser of the first set wavelength below a position at which the laser of the first laser generator is generated; a third laser generator configured to horizontally generate a laser of a second set wavelength longer than the first set wavelength, below a position at which the laser of the second laser generator is generated; a first light receiver configured to receive the laser of the first laser generator and generate a light detection signal at a position on the inner sidewall of the main body facing the position at which the laser of the first laser generator is generated; a second light receiver configured to receive the laser of the second laser generator and generate a light detection signal at a position on the inner sidewall of the main body facing the position at which the laser of the second laser generator is generated; a third light receiver configured to receive the laser of the third laser generator and generate a light detection signal at a position on the inner sidewall of the main body facing a position at which the laser of the third laser generator is generated; a data collector configured to receive the light detection signals from the first, the second, and the third light receiver, receive an absorption intensity signal from the semi-transparent cell, and transfer the light detection signals and the absorption intensity signal; a controller configured to receive the light detection signals and the absorption intensity signal from the data collector, calculate, on the basis of the light detection signals and the absorption intensity signal, fine dust particle movement speeds, fine dust particle shapes, a fine dust particle distribution, fine dust particle sizes, and a fine dust particle amount, and output a display control signal corresponding thereto; and a display configured to receive the display control signal from the controller and display the fine dust particle movement speeds, the fine dust particle shapes, the fine dust particle distribution, the fine dust particle sizes, and the fine dust particle amount that are calculated.

In the system for detecting fine dust using low-power laser light according to the embodiment, a bottom of the chamber on an inside thereof may be equipped with a plurality of electric rods that each receive a progressively decreasing power value, and the system may further include: a power supply configured to provide the progressively decreasing power value to each of the plurality of electric rods; and a sine wave generator configured to provide the sine wave inside the chamber, wherein the controller may provide a drive control signal to the power supply and the sine wave generator.

In the system for detecting fine dust using low-power laser light according to the embodiment, the first set wavelength may be 300 nm, and the second set wavelength may be 500 nm.

According to another embodiment ofthe present disclosure, there is provided a method for detecting fine dust using low-power laser light, the method including: driving, by a controller, a first, a second, and a third laser generator, and receiving light detection signals from a first, a second, and a third light receiver; determining, on the basis of the light detection signals by the controller, whether fine dust particle movement speeds are calculated; determining, on the basis of the light detection signals by the controller, whether fine dust particle shapes and a fine dust particle distribution are calculated when the fine dust particle movement speeds are calculated at the determining of whether the movement speeds are calculated; driving, by the controller, a power supply to apply a progressively decreasing power value to each of a plurality of electric rods when the fine dust particle shapes and the fine dust particle distribution are calculated; driving, by the controller, a sine wave generator to apply a sine wave inside a chamber; receiving, by the controller, an absorption intensity signal from a semi-transparent cell; analyzing, by the controller, information on the fine dust particle movement speeds, the fine dust particle shapes, and the fine dust particle distribution that are calculated, and the absorption intensity signal received from the semi-transparent cell overall to calculate the fine dust particle movement speeds, the fine dust particle shapes, the fine dust particle distribution, fine dust particle sizes, and a fine dust particle amount; and displaying the fine dust particle movement speeds, the fine dust particle shapes, the fine dust particle distribution, the fine dust particle sizes, and the fine dust particle amount that are calculated, through a display.

In the method for detecting fine dust using low-power laser light according to the embodiment, the method may further include analyzing, by the controller, the fine dust particle movement speeds on the basis of the light detection signal received from the second light receiver when the fine dust particle movement speeds are not calculated at the determining of whether the movement speeds are calculated, wherein after the analyzing of the fine dust particle movement speeds, the determining of whether the fine dust particle shapes and the fine dust particle distribution are calculated may take place.

In the method for detecting fine dust using low-power laser light according to the embodiment, the method may further include analyzing, by the controller, the fine dust particle shapes and the fine dust particle distribution on the basis of the light detection signal received from the third light receiver when the fine dust particle shapes and the fine dust particle distribution are not calculated at the determining of whether the fine dust particle shapes and the fine dust particle distribution are calculated, wherein after the analyzing ofthe fine dust particle shapes and the fine dust particle distribution, the applying of the power value may take place.

According to the system and the method for detecting fine dust using low-power laser light according to the embodiments of the present disclosure, three low-power laser beams are horizontally emitted by the laser generators at the positions on the inner sidewall of the main body that has the open upper part and the lower part provided with the semi-transparent cell. The laser beams are received by the light receivers at the positions facing the positions on the inner sidewall of the main body, and detection signals are input from the light receivers. Below the semi-transparent cell, progressively decreasing potential energy and a sine wave are applied to separate the fine dust particles accumulated on the semi-transparent cell by size. An absorption intensity signal varying according to the distribution of the fine dust particles is input and used to calculate the movement speeds, shapes, distribution, sizes, and amount of the fine dust particles. Accordingly, the movement speeds, shapes, distribution, sizes, and amount of fine dust particles can be monitored in real time, and a manufacturing cost is low.

### BRIEF DESCRIPTION OF THE DRAWINGS

The above and other objectives, features, and other advantages of the present disclosure will be more clearly understood from the following detailed description when taken in conjunction with the accompanying drawings, in which:
FIG. 1 is a diagram illustrating an overall configuration of a system for detecting fine dust using low-power laser light according to an embodiment of the present disclosure; and
FIG. 2 is a flowchart illustrating a method for detecting fine dust by using a system for detecting fine dust using low-power laser light, according to an embodiment of the present disclosure.

### DETAILED DESCRIPTION OF THE INVENTION

Hereinafter, embodiments of the present disclosure will be described in detail with reference to the accompanying drawings.

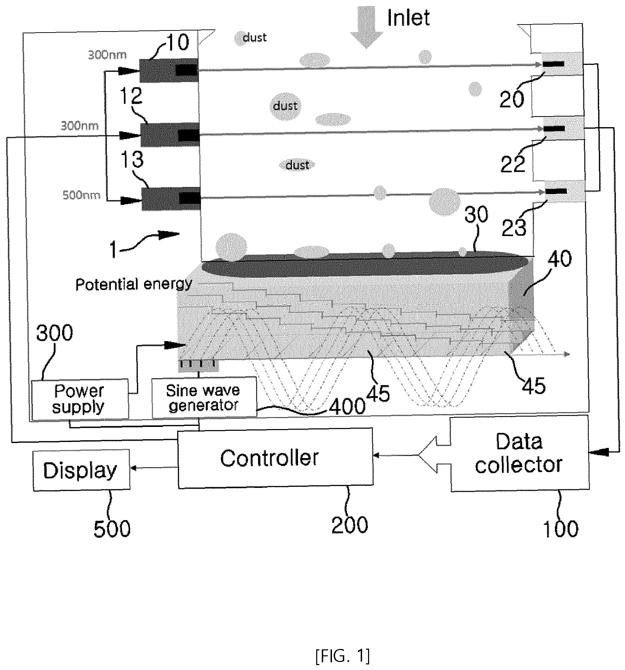

FIG. 1 is a diagram illustrating an overall configuration of a system for detecting fine dust using low-power laser light according to an embodiment of the present disclosure.

As shown in FIG. 1, the system for detecting find dust using low-power laser light according to the embodiment of the present disclosure includes a main body 1, a first laser generator 10, a second laser generator 12, a third laser generator 13, a first light receiver 20, a second light receiver 22, a third light receiver 23, a chamber 40, a data collector 100, a controller 200, a power supply 300, a sine wave generator 400, and a display 500.

The main body 1 is in a cuboid shape having the open upper part. Fine dust flows into the main body 1 through an inlet at the upper part thereof, and falls freely. The lower part of the main body 1 is provided with a semi-transparent cell 30 and the dust accumulates thereon. Below the semi-transparent cell 30, potential energy having progressively decreasing intensity and a sine wave are applied in the chamber 40, so that the fine dust particles accumulated on the semi-transparent cell 30 are separated by size (i.e., the dust particles separately collected on the semi-transparent cell 30 have smaller sizes in the progress direction).

At a side of the semi-transparent cell 30, absorption intensity signals varying according to the distribution of the collected fine dust particles may be detected.

Herein, the semi-transparent cell 30 is a transparent conductor through which electricity passes, and examples of the semi-transparent cell 30 include a solar cell and semi-transparent glass.

The chamber 40 is for applying the potential energy having progressively decreasing intensity and the sine wave below the semi-transparent cell 30.

The bottom of the chamber 40 on the inside thereof is equipped with a plurality of electric rods 45 that each receive a progressively decreasing power value from the power supply 300. By the power value applied to each of the plurality of electric rods 45, potential energy is generated. The potential energy generated by the plurality of electric rods 45 shows the distribution in which the intensity decreases progressively in the progress direction (i.e., the X-axis progress direction).

The sine wave generator 400 provides a sine wave inside the chamber 40 to disperse the fine dust particles accumulated on the semi-transparent cell 30 positioned above the chamber 40 so that the fine dust particles of different sizes are prevented from being mixed.

The first laser generator 10 horizontally generates a laser of a first set wavelength (for example, 300 nm) at an end (left end) on an inner sidewall of the main body 1.

The second laser generator 12 horizontally generates a laser of the first set wavelength at a position on the inner sidewall of the main body 1 lower than the position at which the laser of the first laser generator 10 is generated.

The third laser generator 13 horizontally generates a laser of a second set wavelength (for example, 500 nm) longer than the first set wavelength, at a position on the inner sidewall of the main body 1 lower than the position at which the laser of the second laser generator 12 is generated.

The driving ofthe first, the second, and the third laser generator 10, 12, and 13 is controlled by control signals output from the controller 200.

The first light receiver 20 receives the laser emitted from the first laser generator 10 and generates a light detection signal corresponding to the laser, at a position (right end) on the inner sidewall of the main body 1 facing the position at which the laser of the first laser generator 10 is generated.

The second light receiver 22 receives the laser emitted from the second laser generator 12 and generates a light detection signal corresponding to the laser, at a position on the inner sidewall of the main body 1 facing the position at which the laser of the second laser generator 12 is generated.

The third light receiver 23 receives the laser emitted from the third laser generator 13 and generates a light detection signal corresponding to the laser, at a position on the inner sidewall of the main body 1 facing the position at which the laser of the third laser generator 13 is generated.

The data collector 100 receives the light detection signals from the first, second, and third light receivers 20, 22, and 23, receives the absorption intensity signals from the semi-transparent cell 30, and transfers the signals to the controller 200.

The controller 200 is a microcomputer that controls all the elements of the present disclosure. The controller 200 receives the light detection signals and the absorption intensity signals from the data collector 100, calculates, on the basis of the signals, fine dust particle movement speeds, fine dust particle shapes, a fine dust particle distribution, fine dust particle sizes, and a fine dust particle amount, and outputs a display control signal corresponding thereto to the display 500.

The controller 200 provides a drive control signal to the first, second, and third laser generators 10, 12, and 13, the power supply 300, and the sine wave generator 400 to control operation.

The power supply 300 supplies different power values to the plurality of electric rods 45 in the chamber 40 respectively. Herein, the power values supplied to the respective electric rods 45 decrease progressively in the progress direction.

The sine wave generator 400 provides a sine wave inside the chamber 40 to prevent the dust particles of different sizes from being mixed on the semi-transparent cell 30.

The display 500 is an output device that receives a display control signal from the controller 200 and displays the fine dust particle movement speeds, fine dust particle shapes, fine dust particle distribution, fine dust particle sizes, and fine dust particle amount that are calculated. Examples of the display 500 may include CRT, LCD, LED, and OLED displays.

Hereinafter, described will be a method for detecting fine dust by using the system for detecting fine dust using low-power laser light according to the embodiment of the present disclosure configured as described above.

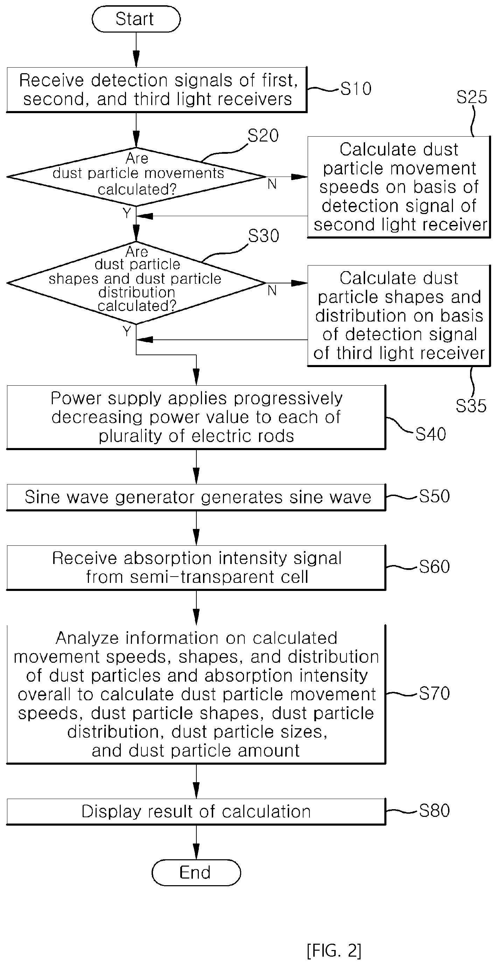

FIG. 2 is a flowchart illustrating a method for detecting fine dust by using a system for detecting fine dust using low-power laser light, according to an embodiment of the present disclosure. Herein, the letter S denotes a step.

First, the controller 200 drives the first, second, and third laser generators 10, 12, and 13 to generate lasers, and receives light detection signals from the first, second, and third light receivers 20, 22, and 23 at step S10.

Next, the controller 200 determines whether fine dust particle movement speeds are calculated, on the basis of the received light detection signals at step S20.

Herein, the fine dust particle movement speeds are analyzed on the basis of the light detection signal received from the second light receiver 22 and the light detection signal received from the first light receiver 20 and whether the fine dust particle movement speeds are calculated is determined.

When the fine dust particle movement speeds are calculated at step S20 (Y), the controller 200 determines, on the basis of the received light detection signals (specifically, the light detection signals received from the second light receiver 22 and the third light receiver 23), whether fine dust particle shapes and a fine dust particle distribution are calculated at step S30.

Next, when the fine dust particle shapes and the fine dust particle distribution are calculated at step S30 (Y), the controller 200 drives the power supply 300 to apply a progressively decreasing power value to each of the plurality of electric rods 45 at step S40, so that progressively decreasing potential energy is formed inside the chamber 40.

Next, the controller 200 drives the sine wave generator 400 to apply a sine wave inside the chamber 40 at step S50, so that the fine dust particles of different sizes collected on the semi-transparent cell 30 are prevented from being mixed.

Next, the controller 200 receives an absorption intensity signal from the semi-transparent cell 30 at step S60.

Herein, the fine dust particles collected on the semi-transparent cell 30 are separately arranged by size by the potential energy and the sine wave. That is, the fine dust particles collected on the semi-transparent cell 30 are collected such that the particles have smaller sizes in the progress direction.

Next, the controller 200 analyzes information on the fine dust particle movement speeds, the fine dust particle shapes, and the fine dust particle distribution calculated at steps S20, S30, S25, and S35, and the absorption intensity signal received from the semi-transparent cell 30 overall, and calculates the fine dust particle movement speeds, the fine dust particle shapes, the fine dust particle distribution, the fine dust particle sizes, and the fine dust particle amount at step S70.

Next, the controller 200 displays, through the display 500, a result of calculating the fine dust particle movement speeds, the fine dust particle shapes, the fine dust particle distribution, the fine dust particle sizes, and the fine dust particle amount at step S80. Accordingly, the user is capable of monitoring the fine dust particle movement speeds, the fine dust particle shapes, the fine dust particle distribution, the fine dust particle sizes, and the fine dust particle amount.

In the meantime, when the fine dust particle movement speeds are not calculated at step S20 (N), the controller 200 calculates the fine dust particle movement speeds on the basis of the light detection signal received from the second light receiver 22 at step S25, and proceeding to step S30 takes place. That is, the fine dust particle speeds are calculated on the basis of the rate of change of the light detection signal received from the second light receiver 22.

In the meantime, when the fine dust particle shapes and the fine dust particle distribution are not calculated at step S30 (N), the controller 200 calculates the fine dust particle shapes and the fine dust particle distribution on the basis of the light detection signal received from the third light receiver 23 at step S35, and proceeding to step S40 takes place.

In the meantime, in the above-described embodiment, the controller 200 calculates fine dust particle movement speeds, fine dust particle shapes, and fine dust particle distribution on the basis of the light detection signals input from the first, second, and third light receivers 20, 22, and 23, and analyzes information resulting from the calculation and an absorption intensity signal from the semi-transparent cell overall, thereby calculating dust particle movement speeds, fine dust particle shapes, a fine dust particle distribution, fine dust particle sizes, and a fine dust particle amount. However, instead of this, the controller 200 inputs light detection signal information received from the first, second, and third light receivers 20, 22, and 23 and absorption intensity signal information received from the semi-transparent cell 30 into an artificial neural network model trained by deep learning with a data set composed of light detection signal information, absorption intensity signal information, and information on fine dust particle movement speeds, fine dust particle shapes, a fine dust particle distribution, fine dust particle sizes, and a fine dust particle amount, thereby calculating fine dust particle movement speeds, fine dust particle shapes, a fine dust particle distribution, fine dust particle sizes, and a fine dust particle amount.

According to the system and the method for detecting fine dust using low-power laser light according to the embodiments of the present disclosure, three low-power laser beams are horizontally emitted by the laser generators at the positions on the inner sidewall of the main body that has the open upper part and the lower part provided with the semi-transparent cell. The laser beams are received by the light receivers at the positions facing the positions on the inner sidewall of the main body, and detection signals are input from the light receivers. Below the semi-transparent cell, progressively decreasing potential energy and a sine wave are applied to separate the fine dust particles accumulated on the semi-transparent cell by size. An absorption intensity signal varying according to the distribution of the fine dust particles is input and used to calculate the movement speeds, shapes, distribution, sizes, and amount of the fine dust particles. Accordingly, the movement speeds, shapes, distribution, sizes, and amount of fine dust particles can be monitored in real time, and a manufacturing cost is low.

The optimum exemplary embodiments have been disclosed and the specific terms are used in the drawings and the specification, but the exemplary embodiments and the terms are used just for the purpose of describing the exemplary embodiments of the present disclosure, but not used to limit meanings or restrict the scope of the present disclosure disclosed in the claims. Therefore, those skilled in the art will understand that various modifications of the exemplary embodiment and any other exemplary embodiments equivalent thereto are available. Accordingly, the true technical protection scope of the present disclosure should be determined by the technical idea of the appended claims.

## Claims

1. A system for detecting fine dust using low-power laser light, the system comprising:
a main body (1) having an open upper part and a lower part provided with a semi-transparent cell (30);
a chamber (40) configured to allow potential energy having progressively decreasing intensity and a sine wave to be applied below the semi-transparent cell;
a first laser generator (10) configured to horizontally generate a laser of a first set wavelength at an end on an inner wall of the main body;
a second laser generator (12) configured to horizontally generate a laser of the first set wavelength below a position at which the laser of the first laser generator is generated;
a third laser generator (13) configured to horizontally generate a laser of a second set wavelength longer than the first set wavelength, below a position at which the laser of the second laser generator is generated;
a first light receiver (20) configured to receive the laser of the first laser generator and generate a light detection signal at a position on the inner wall of the main body facing the position at which the laser of the first laser generator is generated;
a second light receiver (22) configured to receive the laser of the second laser generator and generate a light detection signal at a position on the inner wall of the main body facing the position at which the laser of the second laser generator is generated;
a third light receiver (23) configured to receive the laser of the third laser generator and generate a light detection signal at a position on the inner wall of the main body facing a position at which the laser of the third laser generator is generated;
a data collector (100) configured to receive the light detection signals from the first, the second, and the third light receiver, receive an absorption intensity signal from the semi-transparent cell, and transfer the light detection signals and the absorption intensity signal;
a controller (200) configured to receive the light detection signals and the absorption intensity signal from the data collector, calculate, on the basis of the light detection signals and the absorption intensity signal, fine dust particle movement speeds, fine dust particle shapes, a fine dust particle distribution, fine dust particle sizes, and a fine dust particle amount, and output a display control signal corresponding thereto; and
a display (500) configured to receive the display control signal from the controller and display the fine dust particle movement speeds, the fine dust particle shapes, the fine dust particle distribution, the fine dust particle sizes, and the fine dust particle amount that are calculated.

2. The system of claim 1, wherein a bottom of the chamber (40) on an inside thereof is equipped with a plurality of electric rods (45) that each receive a progressively decreasing power value, and
the system further comprising:
a power supply (300) configured to provide the progressively decreasing power value to each of the plurality of electric rods; and
a sine wave generator (400) configured to provide the sine wave inside the chamber,
wherein the controller (200) provides a drive control signal to the power supply and the sine wave generator.

3. The system of claim 1, wherein the first set wavelength is 300 nm, and the second set wavelength is 500 nm.

4. A method for detecting fine dust using low-power laser light by using a system for detecting fine dust using low-power laser light, the method comprising:
driving, by a controller (200), a first, a second, and a third laser generator (10, 12, and 13), and receiving light detection signals from a first, a second, and a third light receiver (20, 22, and 23);
determining, on the basis of the light detection signals by the controller, whether fine dust particle movement speeds are calculated;
determining, on the basis of the light detection signals by the controller, whether fine dust particle shapes and a fine dust particle distribution are calculated when the fine dust particle movement speeds are calculated at the determining of whether the movement speeds are calculated;
driving, by the controller, a power supply (300) to apply a progressively decreasing power value to each of a plurality of electric rods (45) when the fine dust particle shapes and the fine dust particle distribution are calculated;
driving, by the controller, a sine wave generator (400) to apply a sine wave inside a chamber (40);
receiving, by the controller, an absorption intensity signal from a semi-transparent cell (30);
analyzing, by the controller, information on the fine dust particle movement speeds, the fine dust particle shapes, and the fine dust particle distribution that are calculated, and the absorption intensity signal received from the semi-transparent cell overall to calculate the fine dust particle movement speeds, the fine dust particle shapes, the fine dust particle distribution, fine dust particle sizes, and a fine dust particle amount; and
displaying the fine dust particle movement speeds, the fine dust particle shapes, the fine dust particle distribution, the fine dust particle sizes, and the fine dust particle amount that are calculated, through a display (500) .

5. The method of claim 4, further comprising analyzing, by the controller, the fine dust particle movement speeds on the basis of the light detection signal received from the second light receiver when the fine dust particle movement speeds are not calculated at the determining of whether the movement speeds are calculated,
wherein after the analyzing of the fine dust particle movement speeds, the determining of whether the fine dust particle shapes and the fine dust particle distribution are calculated takes place.

6. The method of claim 4, further comprising analyzing, by the controller, the fine dust particle shapes and the fine dust particle distribution on the basis of the light detection signal received from the third light receiver when the fine dust particle shapes and the fine dust particle distribution are not calculated at the determining of whether the fine dust particle shapes and the fine dust particle distribution are calculated,
wherein after the analyzing of the fine dust particle shapes and the fine dust particle distribution, the applying of the power value takes place.
